# EUROPEAN PATENT APPLICATION

(11) **EP 2 665 027 A1**
(43) Date of publication of application: **20.11.2013**
(21) Application number: 12168389.0
(22) Date of filing: 16.05.2012
(51) Int. Cl.: G06Q 30/02

(54) **Interactive product sample display unit**

(71) Applicant: The Procter & Gamble Company, Cincinnati, OH 45202 (US)
(72) Inventor: Checchi, Maria Grazia, CH-1248 Hermance (CH); Hill, Simon David Julian, CH-1299 Crans-Pres-Celigny (CH)
(74) Representative: Kohol, Sonia

(57) **Abstract**

The product display unit comprising a podium stand, a test sample product mounting adapted to house a test sample product, said mounting having an activation means and being in communication with an information display unit which is triggered by the activation means.

## Description

### FIELD OF THE INVENTION

The present invention relates to a product display unit to display at least one test sample product(s) for fine fragrances having an interactive information display unit.

### BACKGROUND OF THE INVENTION

Fine fragrance consumers do not frequently visit fine fragrance retail outlets and may make a purchase only about one or two times a year. In contrast, there are typically over 200 new fine fragrance product launches per year and fine fragrance retail outlets typically stock thousands of fine fragrance products.

As a consequence, individual fine fragrance brands face a challenge in order to be more visible in the retail store environment and particularly in how to communicate the concept behind a new fragrance to consumers and encourage trial. It is known that consumers are driven to decide what brands they prefer by the brand equity projected by the brand and especially the mood that it evokes. This is typically supported by imagery and tools that remind the consumer about advertising that they may have seen such as television advertising, or advertising in printed or digital media. For example, it is known that many consumers visit the store with a celebrity endorsement in mind, but may find it difficult to remember which celebrity was linked to which brand. Consequently, and particularly in a crowded retail environment consumers often revert to simply smelling and sampling one bottle of fine fragrance after another and potentially confusing which sample they prefer, or are not able to make a selection and do not purchase a product at all.

To improve the consumer experience in store and facilitate a purchase, a large number of retail outlets have invested in in-store display devices, kiosks and the use of video and audio displays. Nevertheless, a number of problems remain. Firstly, as discussed above, given the large number of products displayed within the fine fragrance shopping aisle, the consumer may be overwhelmed by the product array such that the consumer is unable to distinguish between the differently branded products and or fail to notice or find individual brands displayed alongside hundreds of others.

Alternatively, if a consumer is seeking to locate a particular fine fragrance brand within a particular store with which they are not necessarily familiar with and or where the layout has changed, the consumer may spend a considerable amount of time and struggle to find a particular product brand. Consequently, consumers may become frustrated at being unable to readily navigate the store and locate the branded product that the consumer wishes to purchase.

Furthermore, many consumers are not confident and comfortable to shop in the fine fragrance category. Many consumers do not understand how fine fragrances products are distinguished from one another and need to have their choice validated by an influencer such as a celebrity. Moreover, many consumers are uncomfortable to browse the category or engage in conversations with in-store beauty consultants and find the purchase experience intimidating. Consequently there is need to assist consumers to select the appropriate fine fragrance product with reduced anxiety and stress.

Despite in store improvements to assist consumers in the identification of individual branded fine fragrance products, it has been identified that this is not necessarily sufficient to enable the consumer to make a product selection and purchase. Consequently, sampling of the products still remains an essential part of the selection and purchase process. However it is also known that, if a consumer tests too many samples during a single store visit, the associated individual fine fragrances can no longer be identified by the consumer. It is therefore desirable that a potential consumer tests the sample in the first three test samples tried.

Thus, there is a need to provide a means of interaction for consumers with product samples particularly for fine fragrances in order to enable consumers to locate a pre identified fine fragrance of a fragrance house or brand and sampling stand and assist the consumer in making their product choice.

The interactive display unit of the present invention provides a means to attract consumers, particularly in a busy and or densely stocked retail environment. It encourages browsing and provides the consumer with product information and imagery when a test sample is removed. This information helps "bring to life" the concept of the particular fragrance, thereby aiding consumer understanding of the product story, the ingredients, and the mood that the product evokes. It also enhances the shopping experience and in general makes the shopper "linger longer" with the brand in-store.

Interactive video shelving systems are known for example in WO2011/127577.

### SUMMARY OF THE INVENTION

The present invention relates to a product display unit (1) comprising a podium stand (2), at least one test sample product mounting (12) adapted to house at least one test sample product(s), said mounting having an activation means (11) associated therewith, and at least one information display unit (4); wherein said mounting is in communication with said information display unit (4) said information display unit (4) having at least one background display and at least one activated display; wherein said background and activated displays are triggered by said activation means (11).

### BRIEF DESCRIPTION OF THE DRAWINGS

Fig.1a: Front view of the product display unit (1) of a first embodiment of the present invention
Fig. 1b: Top view of a first embodiment.
Fig .2a: Front view of the product display unit (1) of a second embodiment of the present invention.
Fig. 2b: Top view of second embodiment.

### DETAILED DESCRIPTION OF THE INVENTION

The present invention relates to a product display unit (1), preferably for fragrances, fragrance ancillaries and/ or personal beauty care products comprising a podium stand (2) on which to display test sample product(s) (5,6,7,8) and preferably products for purchase and an interactive information display unit (4).

The podium stand (2) is an upright stand and may be of any shape or size, preferably substantially rectangular or square. The podium stand (2) preferably provide at least one, more preferably four side faces (3). The side faces (3) may be substantially vertical side faces (3) or the faces may be provided at an incline. The podium stand (2) may be self supporting or it may be abutted or secured against a surface such as a wall or an in-store space partition. Alternatively, the podium stand (2) may be located within or on another unit such as a shelf or stand. The podium stand (2) may comprise a base (15) stand in order to provide stability to the unit (1).

The podium stand (2) is provided with at least one test sample product mounting (12) adapted to house at least one test product sample (5). Suitable test sample prduct mounting (12) include shelf (9) or shelving unit or at least one product cradle (10 )or combination thereof to house a test sample product(s) (5,6,7,8). Preferably, at least one of the vertical side faces (3) of the podium stand (2) is provided with a shelf (9) or shelving unit(s) or product cradle(s) or a combination thereof (10). The podium stand (2) is also preferably provided with additional shelving or storage means (13) such draws for storage of additional test products and or for products available to purchase once the consumer has made a selection. The products for purchase associated with the test sample products (5,6,7,8) can be stored in such shelving or storage means (13) adjacent, below, above or horizontally to the associated test sample product(s) (5,6,7,8). Preferably the products for purchase are stored below or adjacent on the same side face (3) as the test product sample(s) (5,6,7,8).

The podium stand (2) is provided with at least one test product sample mounting (120 adapted to house at least one test sample product. The test product sample mounting may comprise a corresponding shelf (9), or product cradle. Numerous configurations of test sample product(s) (5,6,7,8) can be used. Preferably, the podium stand (2) may have from 1 to 12 or 1 to 16 test samples depending on the size and space available for the podium. In one embodiment, the podium has at least 2 test product samples. In another embodiment the podium stand (2) has at least 4test product samples. In yet another embodiment the podium stand (2) has 6 test samples and in yet another embodiment the podium stand (2) may have 3 test samples. In each of these embodiments, the test samples may be of identical or different test samples or combinations thereof. Corresponding shelving or test product cradles or combination thereof are located on the respective side faces (3) of the podium stand (2) in order to accommodate the required test product samples.

In embodiments wherein, a shelf (9) houses a single test product sample, the sample is typically centred on the shelf (9).

In embodiments having more than one test samples located on the product display unit (1), the samples may be oriented such that the samples are located adjacent to one another which can either be substantially horizontal or vertical, preferably horizontal. Preferably, multiple samples are placed equally distanced from one another in at least one plane.

If housed substantially on the same horizontal plane to one another, the test sample product(s) (5,6,7,8) may be mounted adjacent to one another on the same side face (3) of the podium stand (2) on a single shelf (9) or on individual product cradles or they may be mounted on different side faces (3) of the podium stand (2). In one embodiment having two test samples, the test samples are located on substantially the same horizontal plane, but on opposing vertical side faces (3) of the podium stand (2). The later embodiment provides the consumer with distinct test sample product(s) (5,6,7,8) interaction areas on the unit, whilst enabling consumer to easily reach alternative areas. This allows the consumer to interact with product sample without distraction whilst easily navigating the podium stand (2) to trial a different product test sample.

Alternatively, or in addition if the test product samples are all housed on the same vertical plane, the test product samples are typically located on one vertical side face (3) of the podium stand (2).

Each product test sample is mounted on the podium stand (2) by the use of shelving and or test sample product(s) cradle(s) (10) or combinations thereof. The test sample product(s) cradle (10) provides a casing to hold the product and encourages the product to be replaced in the correct position once a consumer has finished testing the product test sample. The test product cradles (10) may be provided so as to house more than one test sample within a single cradle (10) having separate compartments therein, preferably from one to four compartments.

Alternatively, the shelving or cradles may be provided with test sample product(s) placement indicators (14) to ensure replacement of each test sample in the appropriate positioned location. Suitable indicators (14) include use of symbols such as arrows or stars, contrasting colour and or product brand names. The test sample product(s) cradle (10) may also be located upon a shelf or shelving.

The shelf (9) or test sample product(s) cradle (10) is typically located on the podium stand (2) so that the test sample product(s) (5,6,7,8) is positioned at a height convenient for average consumer interaction, which is typically between average consumer waist height and eye level when standing adjacent to a unit, preferably at about average eye level height. Thus, depending on the location of the podium stand (2) which may be standing on the floor or a raised platform or mounted on another display unit or shelving, the cradle (10) is typically between about 120cm and about 180cm, preferably from about 140cm to about 175cm, more preferably at about 150cm from the floor.

In order to position the test sample product(s) (5,6,7,8) and activate the information display unit (4), the test sample is positioned on a test sample product(s) (5,6,7,8) mounting (12) on the shelf (9) or the product cradle (10). The mounting (12) is preferably centrally located on the shelf (9) or cradle. If more than one test sample product(s) (5,6,7,8) is located on a single horizontal shelf (9), the mounting (12)s will preferably be positioned about equidistance from one another. The test sample product(s) mounting (12) may be provided with test sample product(s) placement indicators (14) to ensure replacement of each test sample in the appropriate positioned location. Suitable indicators include use of symbols such as arrows or stars, contrasting colour and or product brand names.

The test product mounting (12) is provided with a sensor which activates and deactivates the information display unit (4). The sensor is triggered by the placement and removal of the test sample product(s) (5,6,7,8) from the mounting (12). When the test sample is located in its product mounting (12), the background display of the information display unit (4) is activated. Upon removal of the test sample product(s) (5,6,7,8) from the mounting (12), the background display is deactivated and the activated display is re-activated.

The activation or deactivation of the information display unit (4) is provided by an activation means. Any means known in the art such as for example light sensors, strain sensors or pressure sensors may be used.

In one embodiment, the activation means (11) is provided by a light sensor located within the test sample product(s) mounting (12). The sensor is capable of detecting small changes in the amount of light passing through the test product mounting (12). Preferably, the mounting (12) is provided in a semi-transparent or transparent material to aid the functioning on the light sensor. The sensor detects the alteration of the amount of light due to the presence or removal of the test sample from the test product mounting (12). In this manner, the light sensor can detect two possible states namely, when the test sample is located in the test product mounting (12) and when it has been removed. Furthermore, the sensor is capable of detecting when the test sample product has been replaced after use by the consumer, providing a means to further control the product information display unit.

In another embodiment, the activation means (11) is provided by a pressure sensor located within the test sample product(s) mounting (12). Preferably in such embodiments, the test sample product(s) mounting (12) is formed from a material such as glass or acrylic and comprises 2 parts, upper and lower parts. The pressure sensor is then preferably located in between the two upper and lower parts of the mounting (12). In this way, when a test sample product(s) (5,6,7,8) is placed on the mounting (12), the weight of the test sample product(s) (5,6,7,8) is transmitted through the upper part of the mounting (12) and the pressure sensor thereby detects a change in pressure due to the weight of test sample product(s) (5,6,7,8). The sensors can be selected that are capable of detecting changes in weight plus or minus 0.5g and through a range of weights up to 1Kg.

The activation means (11) may be provided with a product contact in order to ensure activation and or to protect the activation means (11) from inadvertent or malicious manipulation and thereby prevent malfunction.

The activation means (11) may be calibrated with the respective test sample product(s) (5,6,7,8), particularly if a pressure sensor means is utilised so that a standard test sample product(s) (5,6,7,8) having a weight of between 50g and 1kg, preferably up to 500 g (tasking into account whether or not the sample is filled to capacity or empty), can be used to activate and deactivate the sensor and thus the product display unit (1). In embodiments utilising light sensors, the activation may be calibrated with the test sample product(s) (5,6,7,8) under a range of ambient conditions to ensure that activation occurs when removing the test sample product(s) (5,6,7,8). In a preferred embodiment, the pressure sensor will be programmed to monitor the pressure, typically several times per second and thereby detect changes in pressure caused by removing or returning the test sample product(s) (5,6,7,8). In addition, the sensors can be preferably connected to a media player that is programmed to identify changes in pressure or light for example at least about 5 times per second. In this way, the sensor and media player constantly monitor changes which would trigger the activation means. Following a routine calibration, the sensor can be programmed to respond when the test sample product has been removed and when it is returned.

The activation means (11) may be provided within or as an integral component of the product mounting (12) itself or it may be located thereon, provided that it is triggered by the placement or removal of the test product sample from the mounting (12).

The podium stand (2) of the present invention is provided with at least one information display unit (4) preferably located in close proximity to an associated test sample product(s) (5,6,7,8). In a preferred embodiment the information display unit (4) is located substantially behind the shelving or test sample product(s) (5,6,7,8) cradle (10), preferably at a distance of from about 5cm to 10cm. Preferably, the information display unit (4) extends vertically above the upper most part of the test product sample and likewise in the horizontal plane by at least 5cm, preferably at least 10cm. The information display unit (4) is typically a display screen connected to a computer or media player. The screen may be of any size depending on its intended location and is typically between about 20cm to about 1m in diameter, such that the screen is clearly visible by consumers and it not entirely obstructed by the test product sample(s).

In one embodiment, the information display unit (4) is located on at least one of the side face(s) (3) of the podium. In another embodiment, at least one side face (3) has at least two information display units. In another embodiment(s) at least two, preferably four of the side face(s) (3) of the podium are provided with at least one information display unit (4).

In one embodiment of the present invention, each test sample product(s) (5,6,7,8) has an individual information display unit (4) associated with it, so that if the podium has two test sample product(s) then consequently the podium will also have two information display units (4) associated therewith. Depending on the orientation and location of the test product samples, the associated information display units may be located i) on the same horizontal plane on the same vertical side face (3) of the podium stand (2) or ii) they may be positioned on different vertical side faces (3) of the podium stand (2) or iii) on the vertical plane and single side face (3) of the podium stand (2) to one another.

In another embodiment of the present invention, wherein the podium has at least two test sample product(s) the podium may be supplied with a single information display unit in communication with each associated product mounting of the two test samples..

In another embodiment of the present invention, an individual test sample product(s) (5,6,7,8) may have an information display unit (4) which comprises at least two display screens, preferably three. In such embodiments, the screens may be linked but different so as to communicate a single overall display or they may all have an identical display. Preferably, the two or three information display screens will be located on a single, preferably vertical side face of the podium stand (2).

At least one, preferably all of the information display units of the product display unit (1) have at least one background display and one activated display.

The background display may be any visual or audio display selected by the manufacturer, such as a single still image, moving images, advertising material, product logo or the like. Typically, this background display runs continuously once the display unit is turned on or is selected.

Alternatively, the background display may also be activated upon approach of a consumer to the product display unit (1) by the use of additional sensors as described hereinabove. Such sensors would be activated upon the consumer reaching a certain distance, typically about 1m from a single vertical face of the podium stand thereby causing the background information display to be activated.

Each test product sample will have at least one background information display associated with the product. Similarly each test product sample will have at least one activated information display associated with the product.

The activated display is activated upon removal of the test sample product(s) (5,6,7,8) from the product mounting (12). The activated display will display a different display to the background display. This may be a similar display type; in other words if a still image is used as the background display, the activated display may be a different still image, or alternatively it may be a different type of display such as a moving image or advertising material. Upon replacement of the test product sample in its respective mounting (12), the background information display is activated. Typically, the computer or media player will be programmed to allow the activated display to finish prior to the background display commencing. Alternatively the activated display can be terminated mid way through and the background display will be immediately activated. In another embodiment the background display may be programmed to be activated after completion of the activated display or after a certain predetermined time period without the necessity to replace the test product sample. This is particularly beneficial in circumstances where the consumer does not replace the test sample product(s) (5,6,7,8) in its respective mounting (12). Similarly, if more than one test sample is connected to a single information display unit, then the media player and computer can be programmed accordingly to a predetermined default, if more than one sample is removed or replaced at the same time period.

The background display and activate display will typically display material for a predetermined time period, typically about 10 seconds to 5 minute, preferably 10 seconds to 1 minute which can selected for the type of product and display unit location.

The background and activated display are triggered by the activation means (11) which are connected to a computer or media player which are programmed accordingly. In embodiments where the display unit comprises more than one display screen, each display screen may be provided with its own dedicated media player or computer or they may be all be connected to a single device. The computer or media player may be located on or within the display unit, preferably not visible to the consumer or they may be remotely located.

The test sample product(s) mounting (12) may be provided with a location means, such as an indent or cavity footprint to ensure placement of the test sample bottle in corresponding the mounting (12). This is particularly advantageous if multiple test sample product(s) (5,6,7,8) are available on the podium and or the test sample product(s) (5,6,7,8) have differing shapes and or base (15) profiles to ensure each test product sample is returned by the consumer to its allocated mounting (12).

Test sample product(s) may also be supplied with a security means to ensure that the sample products are not removed from the podium permanently. Suitable security means include security tags or a security cables preferably provided on an extendable and retractable cable and provided with permanent attachment to the display unit.

The product display unit (1) may be provided with a lighting system and optionally an audio system. The lighting system may be used to light the podium stand (2) itself and or associated shelf (9) or shelving and cradle(s) or component thereof independently.

In addition, the lightening system may also be activated by the activation means (11) such that upon removal of the test sample product(s) (5,6,7,8) alternative lighting or additional lighting is activated preferably to highlight the test sample product(s) (5,6,7,8) and or the associated information display unit(s).

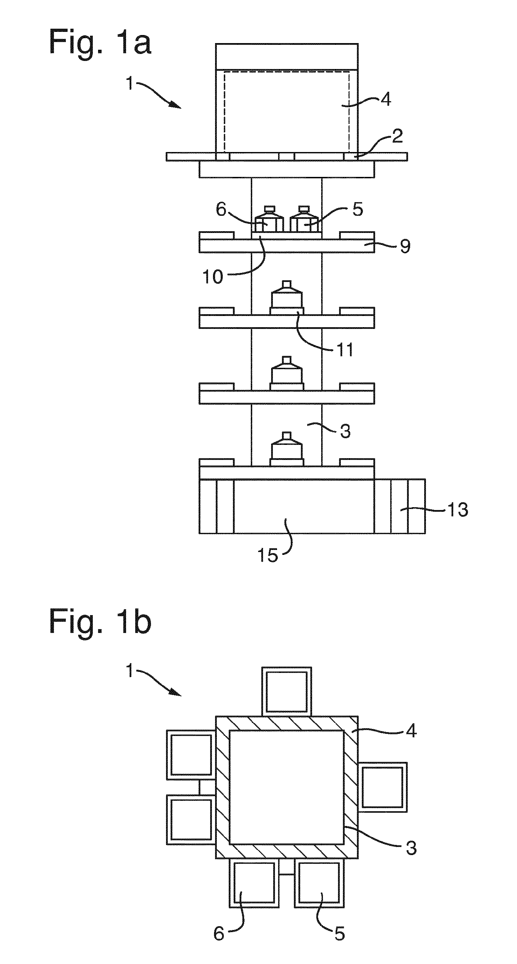

Figure 1a shows a front view of one preferred embodiment of the present invention. The product display unit (1) comprises a self supporting podium stand (2) having a base (15) having four vertical side faces (3) and comprising 5 shelves on each vertical side face (3) positioned at the same level. The podium comprises a storage means (13) draw located in the base (15) to provide storage for additional samples and or products. On the top shelf (9) of two of the vertical side face (3)s two test product samples (5,6) are positioned on two respective test product sample mounting (12)s, in a cradle (10) whereas on the remaining two vertical side face (3) top shelves comprise a single test product sample on respective mounting (12)s. The remaining 3 horizontal shelves each house a single test product sample. Each of said test sample product mountings (12) is provided with a light activated sensor (11). The product display unit (1) further comprises four information display units located on the top shelf (9) of each side face (3) of the podium stand (2). Each of these information display units is connected to a media player. The remaining shelves may be used to house additional products. Fig 1b shows the top view of this embodiment indicating the four display units and six test sample product(s) (5,6,7,8).

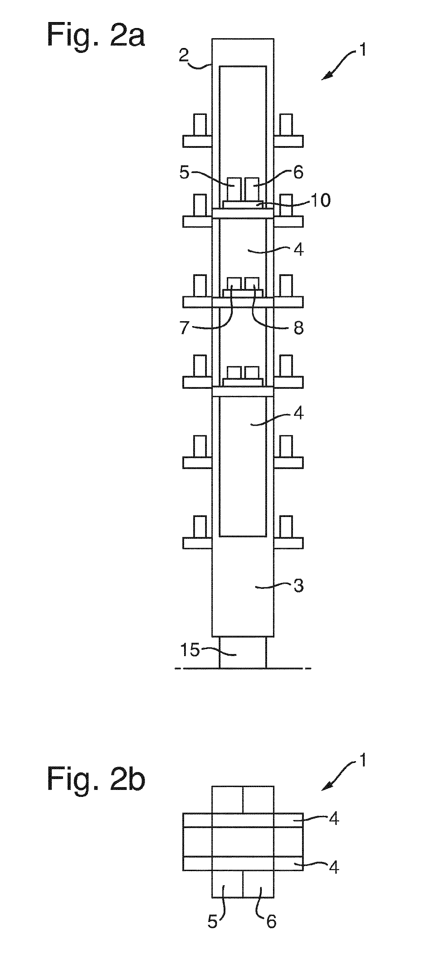

Figure 2a shows the front view of another preferred embodiment of the present invention. The product display unit (1) comprises a self supporting podium stand (2) having a base (15) having four vertical side faces (3) and comprising 3 shelves on two of the vertical side face (3) positioned at the same level and diametrically opposed to one another. The remaining two vertical side faces (3) comprise 6 shelves each having products to purchase. On each of the 3 shelves of the two of the vertical side faces (3), two test product samples are positioned on two respective test product sample mountings (12). Each of said test sample product(s) (5,6,7,8) mountings (12) is provided with a light activated sensor. The product display unit (1) further comprises four information display units. Two located on each vertical side face (3) comprising the test product samples. Each display unit extends approximately half of the length of the vertical side face (3) of the podium stand (2). Each of these information display units is connected to a media player. Fig 2b shows the top view of this embodiment indicating the display units and four test sample product(s) (5,6,7,8)s.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A product display unit (1) comprising a podium stand (2), at least one test sample product mounting (12) adapted to house at least one test sample product(s), said mounting having an activation means (11) associated therewith, and at least one information display unit (4); wherein said mounting is in communication with said information display unit (4) said information display unit (4) having at least one background display and at least one activated display; wherein said background and activated displays are triggered by said activation means (11).

2. A product display unit (1) according to claim 1, wherein said product display unit comprises at least one test sample product(s).

3. A product display unit (1) according to claim 2, wherein said product display unit (1) comprises at least two different test sample product(s), preferably at least three different test sample product(s) (5,6,7,8), and wherein said samples are housed in associated product mountings (12).

4. A product display unit (1) according to claim 3, wherein each said test sample product(s) (5,6,7,8) independently has associated therewith an information display unit (4).

5. A product display unit (1) according to claim 3, wherein said unit comprises a single information display unit (4) associated with said at least two different test sample products.

6. A product display unit (1) according to claim 2, wherein said background display is activated upon placement of said at least one test sample product(s) in said test sample product(s) mounting (12), whereby said activation means (11) is triggered, and wherein said activated display is activated upon removal of said at least one test sample from said test sample product(s) mounting (12) to trigger said activation means (11).

7. A product display unit (1) according to any claim 3, wherein said at least two test sample product(s) are mounted adjacent to one another on said display unit (1).

8. A product display unit (1) according to claim 7, wherein said at least two test samples are mounted vertically adjacent to one another.

9. A product display unit (1) according to claim 7, wherein said at least two test samples are mounted horizontally adjacent to one another.

10. A product display unit (1) according to claim 7, wherein said podium stand (2) comprises at least two, preferably four side faces (3) and wherein said at least two test samples are mounted on adjacent side faces (3), preferably at about ninety degrees to one another.

11. A product display unit (1) according to claim 7, wherein said podium stand (2) comprises at least two, preferably four side faces (3) and wherein said at least two test samples are mounted on diametrically opposed faces, preferably at about 180 degrees to one another.

12. A product display unit (1) according to any one of the proceeding claims, wherein said at least one test product sample is a fine fragrance product sample.

13. A product display unit (1) according to any one of the preceding claims, wherein said test sample product mounting (12) comprises at least one shelving unit (9) or test product sample cradle (10).

14. A product display unit (1) according to claim 1, wherein said activation means (11) is a pressure sensor or a light sensor.

15. A product display unit (1) according to claim 1, wherein said at least one product mounting (12) comprises a test sample product(s) placement indicator (14).
